(19) Europäisches Patentamt

European Patent Office

Office européen des brevets

(11) EP 0 850 875 A1

(12) DEMANDE DE BREVET EUROPEEN

(43) Date de publication:
01.07.1998 Bulletin 1998/27

(51) Int Cl.6: C01B 11/02

(21) Numéro de dépôt: 97402949.8

(22) Date de dépôt: 05.12.1997

(84) Etats contractants désignés:
AT BE CH DE DK ES FI FR GB GR IE IT LI LU MC NL PT SE
Etats d'extension désignés:
AL LT LV MK RO SI

(30) Priorité: 23.12.1996 FR 9615872

(71) Demandeur: ELF ATOCHEM S.A.
92800 Puteaux, Hauts-de-Seine (FR)

(72) Inventeur: Dufour, Pascal
69300 Calliure (FR)

(54) Procédé de fabrication de bioxyde de chlore

(57) Le bioxyde de chlore est obtenu par réduction d'un chlorate dans un acide fort, ladite réduction étant conduite dans un réacteur évaporateur-cristallisoir (4), dans des conditions capables de conduire à un flux gazeux contenant le bioxyde de chlore recherché et un flux de sel dudit acide fort à l'état cristallisé, obtenu comme sous-produit.

Selon l'invention, on amène le flux de sel cristallisé formé dans le réacteur évaporateur-cristallisoir, à tomber dans une jambe d'élutriation (3) dans laquelle il est lavé par une solution saline saturée alimentant ledit réacteur évaporateur-cristallisoir (4) par remontée à contre-courant dans ladite jambe d'élutriation (3).

**Description**

La présente invention a pour objet un procédé de fabrication de bioxyde de chlore par réduction d'un chlorate, en particulier d'un chlorate alcalin, dans un acide fort, ladite réaction étant conduite dans un réacteur évaporateur-cristallisoir dans des conditions capables de conduire à un flux gazeux contenant le bioxyde de chlore recherché et un flux de sel dudit acide fort à l'état cristallisé, obtenu comme sous-produit. Dans le cas où l'acide fort est l'acide chlorhydrique, le bioxyde de chlore est généré dans le réacteur évaporateur-cristallisoir en mélange avec du chlore, la quantité de chlore pouvant être diminuée, voire rendue très faible, si l'on opère en présence de peroxyde d'hydrogène.

La présente invention concerne un perfectionnement aux procédés de production de bioxyde de chlore du type précité, tels que décrits dans le brevet français FR-B-2 464 224 ou les brevets américains US-A-4 178 356 et US-A-4 421 730, procédés selon lesquels le milieu réactionnel est maintenu à son point d'ébullition sous une pression sub-atmosphérique de sorte que le bioxyde de chlore ou le bioxyde de chlore + chlore en mélange avec de la vapeur d'eau (laquelle provient de l'évaporation de l'eau apportée par les réactifs et de l'eau générée par les réactions) soient dégagés en provoquant la cristallisation du sel (chlorure de sodium par exemple).

Le bioxyde de chlore est un gaz commercialement très important dans les domaines tels que le blanchiment de la pâte à papier, les fibres textiles, le traitement bactéricide de l'eau et la décoloration des graisses. On l'utilise également dans le domaine de la dénitrification de gaz industriels ou dans la destruction des phénols des eaux industrielles usagées.

Il est important d'avoir un procédé fiable fonctionnant avec sécurité où la génération du bioxyde de chlore - ou du mélange de bioxyde de chlore et de chlore - est assurée sans aucun danger d'explosion.

Dans le cas des procédés fonctionnant avec l'acide chlorhydrique comme acide fort, on vise à obtenir une concentration en bioxyde de chlore qui soit la plus élevée possible dans le mélange $ClO_2/Cl_2$, et un rapport molaire $ClO_2$ produit sur chlorate alcalin engagé qui soit le plus proche possible de 1, par exemple un rapport molaire $ClO_2/NaClO_3$ de 1. Pour ce faire, il est souvent nécessaire de recourir à des catalyseurs, par exemple les ions argent, bichromate, arsenic, thallium et plus efficacement, palladium.

A titre d'illustration, les réactions pour produire du bioxyde de chlore consistent à réduire un chlorate avec un agent réducteur dans un acide fort, par exemple du chlorate de sodium avec de l'acide chlorhydrique qui est à la fois le réducteur et l'acide fort :

$$x \, NaClO_3 + 2x \, HCl \rightarrow x \, ClO_2 + x/2 \, Cl_2 + x \, NaCl + x \, H_2O \qquad (R_1)$$

$$y \, NaClO_3 + 6y \, HCl \rightarrow 3y \, Cl_2 + y \, NaCl + y \, H_2O \qquad (R_2)$$

x et y représentent les nombres de moles des réactifs engagés et des produits obtenus selon les réactions $(R_1)$ et $(R_2)$ avec les définitions suivantes : $x + y = 1$, $0 \leq x \leq 1$ et $0 < y < 1$.

Le bioxyde de chlore se prépare par la réaction $(R_1)$ mais ne se forme pas avec la réaction $(R_2)$. En conséquence, un procédé économique visera à obtenir uniquement la réaction $(R_1)$ et à éviter la réaction $(R_2)$. On sait que le rapport des vitesses de réaction $R_1/R_2$ augmente pour des valeurs élevées du rapport molaire chlorate/agent réducteur, pour de fortes acidités du milieu réactionnel, mais les deux réactions $(R_1)$ et $(R_2)$ sont difficiles à maîtriser de façon indépendante. Elles demandent une conception et une conduite précises de l'installation.

La conduite du réacteur de génération de bioxyde de chlore (évaporateur-cristallisoir) avec de faibles acidités et avec un rapport chlorate sur agent réducteur $NaClO_3/Cl^-$ assez faible est décrite dans le brevet britannique n° 1 347 740.

Dans ces dernières conditions de conduite du réacteur évaporateur-cristallisoir, pour obtenir un rapport $R_1/R_2$ élevé, il faut sélectionner un catalyseur soluble très actif sur la réaction $(R_1)$. Ceci a pour première conséquence d'augmenter la productivité en bioxyde de chlore, c'est-à-dire le nombre de moles de $ClO_2$ produites par unité de temps avec catalyseur en comparaison avec la même situation sans catalyseur. La deuxième conséquence est une meilleure sélectivité. Les procédés de génération de $ClO_2$, en catalyse homogène avec métaux solubles, se sont faiblement développés industriellement à cause d'utilisation de catalyseurs difficiles à récupérer ou surtout de sélectivité $R_1/R_2$ insuffisantes.

La découverte du palladium comme catalyseur de la réaction $(R_1)$ est décrite dans le brevet japonais n° 2645/1970. Il n'a pas été mis au point un procédé simple pour la récupération du catalyseur à base de métal noble Pd.

A partir de cette découverte, les études de procédés se sont alors développées pour améliorer l'efficacité des catalyseurs à base de palladium en ajoutant des co-catalyseurs aux sels de palladium, tels que des ions plomb, arsenic, manganèse, bichromate ou des oxydes de vanadium (cf brevet américain US-A-4 178 356). Le rapport $R_1/R_2$ passe de 5 - 10 à 25 - 45. Le but est de diminuer les quantités de catalyseurs à utiliser pour fonctionner à catalyseur perdu.

Les études de procédés se sont poursuivies pour améliorer l'efficacité des catalyseurs à base de palladium en complexant les sels de palladium II avec des ligands de type aminoacides, cités dans le brevet français FR-B-2 409 961. Dans le meilleur cas, le rapport $R_1/R_2$ atteindrait 80 selon ce brevet. D'autres ligands β-dicétoniques sont cités dans le brevet américain US-A-4 421 730. Comme il est difficile selon l'art antérieur de récupérer les catalyseurs solubles au palladium, les recherches sont souvent orientées vers l'utilisation de catalyseurs au palladium plus actifs par complexation avec des ligands organiques souvent trop fragiles en milieu oxydant comme le chlorate. Le procédé fonctionne à catalyseur perdu.

Tous les procédés chlorhydriques de génération de bioxyde de chlore utilisant ou n'utilisant pas le catalyseur au palladium génèrent du chlore. Dans le meilleur des cas, c'est-à-dire pour x = 1 dans la réaction ($R_1$) et donc pour y = 0 dans la réaction ($R_2$), la sélectivité $\underline{S}$ du bioxyde de chlore est au mieux de 66,7%, selon l'équation suivante :

$$\underline{S} = \frac{x\,ClO_2\,(moles)}{x\,ClO_2\,(moles) + (x/2 + 3y)\,Cl_2\,(moles)} \times 100 = 66,7\%$$

La production $\underline{P}$ de chlore est inévitable selon ($R_1$) et ($R_2$). Dans le meilleur des cas, c'est-à-dire pour x = 1 dans la réaction ($R_1$) et donc pour y = 0 dans la réaction ($R_2$), la productivité $\underline{P}$ de chlore est au mieux de 33,3% selon l'équation suivante :

$$\underline{P} = \frac{(x/2 + 3y)\,Cl_2\,(moles)}{x\,ClO_2\,(moles) + (x/2 + 3y)\,Cl_2\,(moles)} \times 100 = 33,3\%$$

Il est donc inévitablement fabriqué du chlore selon ($R_1$) et selon ($R_2$) en quantité souvent très supérieure à 33,3%. Pour séparer le bioxyde de chlore et le chlore, deux voies ont été explorées :

(i) Le chlore est séparé du bioxyde de chlore par des lavages à l'eau. Le bioxyde de chlore soluble dans l'eau est ensuite strippé par de l'air. Ce type de procédé largement répandu est très coûteux en moyens de séparation et en moyens de transformation du chlore en acide chlorhydrique, lequel est ensuite recyclable dans la réaction ($R_1$) ou ($R_2$) et constitue une part importante du réactif conférant l'acidité nécessaire aux réactions ($R_1$) et ($R_2$).

(ii) Le chlore, généré selon ($R_1$) et ($R_2$), peut être immédiatement réduit, in situ, par du peroxyde d'hydrogène selon ($R_3$) :

$$H_2O_2 + Cl_2 \rightarrow 2\,HCl + O_2 \qquad (R_3)$$

Les conditions expérimentales pour réussir avec un bon rendement la réaction ($R_3$) exigent de maintenir une teneur en peroxyde d'hydrogène inférieure à 1% en masse, et surtout de conduire la réaction en milieu faiblement acide, soit une teneur en acide chlorhydrique typiquement inférieure à 25 g/l. Ces conditions expérimentales imposent l'utilisation de catalyseur très actif au palladium pour avoir une productivité et une sélectivité satisfaisantes.

A été développé, dans ce but, un procédé avec utilisation de catalyseur au palladium et réduction du chlore in situ avec le peroxyde d'hydrogène (cf brevet américain US-A-4 421 730 cité plus haut).

Les inconvénients de ce procédé et de tous les autres procédés avec catalyseurs sont :

- le catalyseur à base de palladium II est difficile à récupérer ; les doses de ce catalyseur dans le réacteur sont ajustées, en continu, pour minimiser les pertes de $Pd^{2+}$, en maintenant une faible concentration en $PdCl_2$ voisine de 50 mg/l, soit 30 mg/l en $Pd^{2+}$. Le $Pd^{2+}$ est entraîné avec les sels sous-produits ;
- le chlorure de sodium ainsi fabriqué par filtration des eaux-mères contient au minimum, après séchage, environ 5 mg de $Pd^{2+}$ par kg de sel, ce qui constitue un handicap pour recycler le NaCl comme matière première sur une unité de fabrication de chlorate de sodium ;
- dans ce procédé, le catalyseur à base de palladium II est une matière première consommable perdue avec le sel sous-produit ;
- le recyclage des eaux-mères de filtration complique la conduite des installations et nécessite les investissements de sécurité associés à la filtration du chlorure de sodium en contact avec des émanations de dioxyde de chlore gazeux ;
- le chlorure de sodium, sous-produit cristallisé, contient des eaux-mères acides qu'il est impératif de neutraliser ou d'éliminer par lavage pour rendre transportable le sel qui sort du générateur à $ClO_2$ pour aller vers une unité de fabrication de chlorate de sodium, laquelle n'est pas forcément implantée sur le même site.

La présente invention a donc pour but de remédier aux inconvénients précités. A cet effet, la Société Déposante a découvert un moyen permettant de supprimer le recyclage des eaux-mères réactionnelles, en fournissant de façon simple le sel obtenu comme sous-produit, le catalyseur soluble utilisé se trouvant confiné en permanence dans le réacteur évaporateur-cristallisoir pendant la génération de bioxyde de chlore (et de chlore dans le procédé chlorhydrique) et ne posant donc plus de problème de récupération.

Le procédé selon l'invention, tel que défini au début de la présente description, est caractérisé en ce que l'on amène le flux de sel cristallisé formé dans le réacteur évaporateur-cristallisoir, à tomber dans une jambe d'élutriation dans laquelle il est lavé par une solution saline saturée introduite à contre-courant dans ladite jambe d'élutriation.

On désigne par solution saline saturée, une solution aqueuse saturée de chlorure ou une solution aqueuse saturée de chlorate ou une saumure chloratée, saturée en chlorure.

Avantageusement une saumure chloratée est choisie comme solution saline saturée.

Comme chlorate, on utilise généralement le chlorate de sodium, le chlorate de potassium, le chlorate de calcium ou le chlorate de magnésium, en particulier le chlorate de sodium.

Comme acide fort, on utilise généralement l'acide chlorhydrique, l'acide sulfurique et leurs mélanges, en particulier l'acide chlorhydrique.

L'agent réducteur est avantageusement l'ion Cl⁻, provenant notamment du chlorure de sodium, du chlorure de calcium, du chlorure de potassium ou de l'acide chlorhydrique.

On conduit généralement la réaction dans le réacteur évaporateur-cristallisoir en présence d'un catalyseur de la réaction formant le bioxyde de chlore, ledit catalyseur restant en permanence confiné dans ledit réacteur évaporateur-cristallisoir par suite du lavage, dans la jambe d'élutriation, du sel cristallisé sortant de ce dernier. Tous les catalyseurs et co-catalyseurs connus pour la réduction d'un chlorate dans un acide fort conduisant au bioxyde de chlore peuvent être utilisés. De façon préférée, on choisit, comme catalyseur, un sel de palladium (II) ou de manganèse ou un complexe organométallique du palladium (II) ou du manganèse, soluble dans le milieu réactionnel. Des exemples particuliers seront trouvés dans FR-B-2 409 961, US-A-4 178 356 et US-A-4 421 730. Par ailleurs, conformément à la présente invention, dans le cas de l'emploi d'un catalyseur au palladium, la concentration en $Pd^{2+}$ dans le réacteur évaporateur-cristallisoir peut être supérieure à ce qu'elle était dans les procédés connus, pouvant ainsi varier entre $0,3 \times 10^{-3}$ mole/l et 0,017 mole/l.

Dans le procédé selon l'invention, l'alimentation en chlorate consiste généralement en une solution aqueuse de chlorate ou en une saumure chloratée, par exemple une saumure $NaCl/NaClO_3$ provenant notamment d'une boucle d'électrolyse de chlorate de sodium, après élimination du dichromate de sodium.

L'alimentation en chlorate dans le réacteur évaporateur-cristallisoir est assurée en partie et de préférence en totalité par la solution saline saturée remontant à contre-courant la jambe d'élutriation, lorsque la solution saline saturée est constituée de chlorate.

Comme indiqué ci-dessus, dans le cas où l'acide fort est l'acide chlorhydrique, on peut conduire la réaction de l'invention en présence de peroxyde d'hydrogène pour réduire in situ en HCl le chlore formé comme sous-produit dans le réacteur évaporateur-cristallisoir, ledit peroxyde d'hydrogène étant introduit dans le réacteur évaporateur-cristallisoir directement ou avec le flux de solution saline saturée entrant par la jambe d'élutriation ; de l'oxygène étant formé dans le flux de $ClO_2$ ; et la teneur en acide chlorhydrique introduite dans le réacteur évaporateur-cristallisoir étant abaissée pour tenir compte dudit chlore formé in situ.

Conformément à un mode de réalisation du procédé selon l'invention, la jambe d'élutriation plonge dans un récipient de récupération du sel, le flux de solution saline saturée étant adressé à une tête dudit récipient, laquelle est traversée par ladite jambe d'élutriation et est en communication avec l'atmosphère du réacteur évaporateur-cristallisoir par l'intermédiaire d'une canalisation en vue du dégazage dudit flux, ce dernier tombant ensuite dans ledit récipient avant de remonter ladite jambe d'élutriation dans laquelle il lave le sel cristallisé. On choisit les dimensions de la jambe d'élutriation pour obtenir une vitesse ascensionnelle du flux de solution saline saturée très inférieure, par exemple de l'ordre de $10^{-3}$ à $10^{-4}$ m/s, à la vitesse de chute des cristaux de sel, qui est de l'ordre de $10^{-1}$ à $10^{-3}$ m/s.

On peut séparer en discontinu d'avec la solution saline saturée le sel cristallisé ayant décanté dans le récipient précité, en vidangeant ledit sel dans un second récipient rempli de la même solution saline saturée, et avantageusement dégazé par mise en communication avec l'atmosphère du réacteur évaporateur-cristallisoir par l'intermédiaire d'une canalisation, et en adressant la suspension sur un filtre, le filtrat étant recyclé dans ledit second récipient.

On peut également séparer en continu d'avec la solution saline saturée le sel cristallisé ayant décanté dans le récipient précité, en adressant la suspension à un circuit de filtration comportant une essoreuse centrifuge à déchargement automatique, le volume de liquide contenu dans le récipient et dans ledit circuit de filtration et ladite essoreuse étant constant, le filtrat étant recyclé dans ledit récipient.

De manière générale, on utilise le système d'alimentation en solution saline saturée, y compris le ou les filtres, à une température comprise entre -5°C et 90°C, de préférence entre 15 et 70°C, et on maintient le réacteur évaporateur-cristallisoir à une température comprise entre 25 et 90°C, la pression dans celui-ci étant alors maintenue entre 20 et 400 mmHg (2666 Pa et 53329 Pa).

Le sel cristallisé filtré peut être recyclé au moins en partie à l'alimentation en solution saline saturée. Lorsque l'acide fort est HCl et le chlorate est $NaClO_3$, le NaCl cristallisé filtré peut être adressé à une cellule d'électrolyse à chlorate, étant suffisamment pur à cet effet.

On peut faire passer le flux gazeux contenant le bioxyde de chlore, la vapeur d'eau formée, et le cas échéant l'oxygène, dans un réfrigérant pour condenser une part importante de la vapeur d'eau, les condensats étant strippés avec de l'air et l'eau strippée étant évacuée. Lorsque l'acide fort utilisé est l'acide chlorhydrique, le flux gazeux, contenant alors également du chlore, peut être soumis à une séparation $ClO_2/Cl_2$, consistant notamment, si la productivité $\underline{P}$ de chlore est supérieure à 10%, à une dissolution sélective de $ClO_2$ dans l'eau, puis à un strippage à l'air du $ClO_2$ dissous, et si la productivité $\underline{P}$ est inférieure à 10%, par traitement dans une colonne fonctionnant au peroxyde d'hydrogène dilué à environ 0,5 - 1% en poids et contenant moins d'une mole/l d'acide chlorhydrique, l'effluent de ladite colonne étant envoyé dans le réacteur évaporateur-cristallisoir ou étant neutralisé à la soude et mélangé à l'alimentation en solution saline saturée.

Ainsi, avec le procédé de l'invention, tous les inconvénients de la technique antérieure sont évités :

- la récupération du catalyseur ne devient plus une difficulté parce que le catalyseur soluble reste en permanence confiné dans le réacteur à dioxyde de chlore ;
- les concentrations en sels de palladium ou de manganèse solubles dans le réacteur ne sont plus à réduire à une valeur faible limitant la sélectivité et la productivité de la réaction ($R_1$) ;
- le chlorure de sodium précipité dans le réacteur évaporateur-cristallisoir au cours de la réaction est débarrassé des sels de palladium ou de manganèse avant son arrivée sur le filtre. Le catalyseur n'est donc plus à éliminer du gâteau de chlorure de sodium par lavage sur le filtre ;
- le procédé de génération du bioxyde de chlore est simplifié par absence totale de recyclage d'eaux mères réactionnelles, c'est-à-dire contenant de l'acide chlorhydrique, du chlorate et du chlorure de sodium et des gaz dissous $Cl_2$ et $ClO_2$ ;
- le nouveau procédé de dioxyde de chlore permet d'obtenir un sel NaCl sous-produit :

  - ayant une concentration en palladium inférieure à 5 ppm, typiquement comprise entre 0,2 ppm et 2 ppm ;
  - contenant uniquement comme co-produit un maximum de 15% en chlorate de sodium préférentiellement au maximum de 10% ;
  - ne contenant ni acide, ni gaz toxiques dissous tels que $Cl_2$ et $ClO_2$.

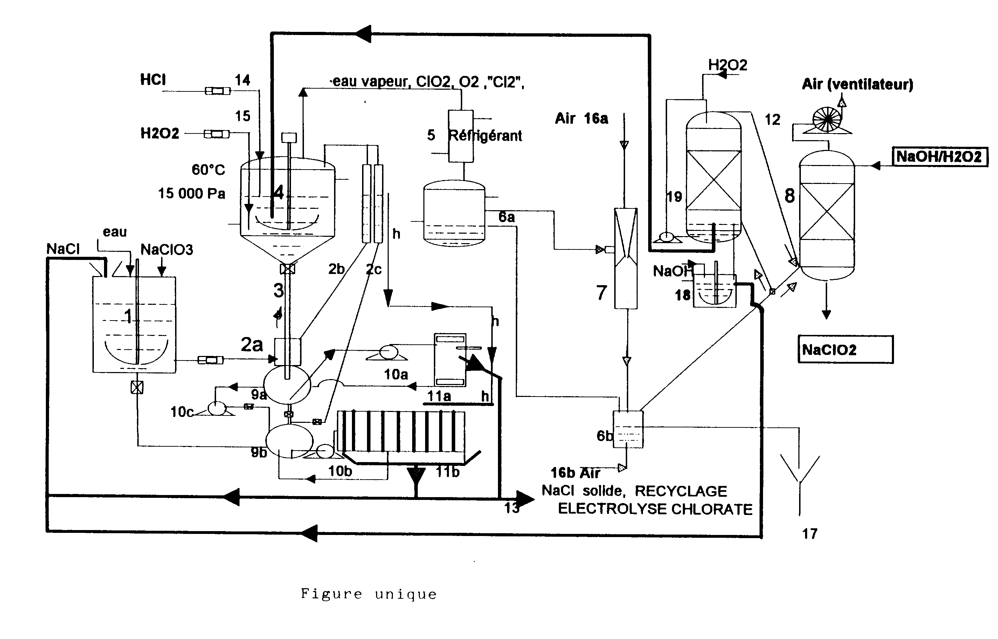

Des modes de réalisation particuliers du procédé de la présente invention vont maintenant être décrits avec référence à la Figure unique qui est un schéma de fonctionnement illustrant ces modes de réalisation. Pour simplifier l'exposé de l'invention, on choisira comme chlorate alcalin le chlorate de sodium et comme sous-produit le chlorure de sodium. Par exemple, on ne sortirait pas du cadre de l'invention en choisissant du chlorate de potassium. On introduira, comme catalyseur, du chlorure de palladium $PdCl_2$, mais on ne sortirait pas de l'invention en utilisant des complexes organométalliques du palladium ou de manganèse ou des sels de manganèse.

Selon la présente invention, il est donc fait appel à un ensemble d'opérations simples combinant le lavage du sel obtenu comme sous-produit dans le réacteur évaporateur-cristallisoir avec un système d'alimentation du cristallisoir en solution saline saturée. Cette solution saline contenant avantageusement du chlorate de sodium est saturée en chlorure de sodium et éventuellement en chlorate de sodium et assure de préférence en totalité l'alimentation en chlorate dans le réacteur évaporateur-cristallisoir.

Un mélange de chlorate de sodium et de chlorure de sodium (saumure $NaCl/NaClO_3$) est préparé dans une cuve 1. Au démarrage de l'installation, le chlorure de sodium provient d'un fournisseur et, ensuite, il est récupéré à la décharge du filtre 11$\underline{a}$ ou 11$\underline{b}$, tel que décrit ci-après. Le chlorate de sodium provient d'un fournisseur sous forme de solide ou de solution concentrée, ou d'une boucle d'électrolyse à chlorate après élimination du bichromate de sodium. La composition du mélange chlorate et chlorure de sodium est judicieusement choisie de façon à obtenir une solution saturée en chlorure de sodium à la température de fonctionnement de la jambe d'élutriation et de ses accessoires 2$\underline{a}$, 2$\underline{b}$, qui vont être décrits ci-après.

Le réacteur évaporateur-cristallisoir 4 est alimenté en acide chlorhydrique par une pompe munie d'une canne d'introduction en 14. Il est, conformément à une variante du procédé, alimenté en peroxyde d'hydrogène par une pompe munie d'une canne d'introduction en 15. La solution saline saturée alimente le réacteur en chlorate de sodium par un système d'introduction décrit plus loin. La génération de bioxyde de chlore + chlore - ou de bioxyde de chlore - est ainsi réalisée dans le réacteur agité 4 selon les techniques habituelles de l'art antérieur.

Le système d'alimentation en chlorate 2$\underline{a}$, 2$\underline{b}$, et 3 est constitué en 2a d'une tête de récipient en communication avec l'atmosphère du réacteur évaporateur-cristallisoir 4 par l'intermédiaire d'une canalisation 2b. Le système 2a et 2b permet de dégazer la saumure d'alimentation provenant de la cuve 1 et empêche toutes les remontées de gaz par la jambe ou canne d'élutriation 3. La jambe d'élutriation 3 plonge dans un récipient 9a situé au-dessous du niveau de la tête du récipient 2a.

La saumure NaCl/NaClO$_3$ provenant de la cuve 1 est dosée par une pompe vers 2a, puis descend en 9a et remonte la jambe d'élutriation 3, tandis que, dans le même temps, le chlorure de sodium formé dans le réacteur évaporateur-cristallisoir 4 tombe au fond du réacteur et descend dans la jambe d'élutriation 3 sous forme d'une "pluie fine". Le chlorure de sodium cristallisé est lavé dans la jambe par la saumure NaCl/NaClO$_3$ remontant à contre-courant.

Lorsque l'on opère en discontinu, le débit de saumure est ajusté de façon à tenir compte du débit volumique de saumure déplacé par le débit volumique du chlorure de sodium cristallisé qui descend dans la jambe. Pour une taille fixée du réacteur et une température fixée de la jambe d'élutriation, le débit de saumure provenant de la cuve 1 est relativement fixé ; en conséquence, les dimensions de la jambe d'élutriation, diamètre et longueur sont choisis de façon à obtenir une vitesse ascensionnelle de la saumure très inférieure à la vitesse de chute des cristaux de NaCl qui est de 10$^{-1}$ à 10$^{-3}$ m/s. La vitesse ascensionnelle est de préférence voisine de 10$^{-3}$ à 10$^{-4}$ m/s. Le choix définitif entre longueur et diamètre est ensuite affiné en fonction du taux de lavage optimal du sel.

Ce sel décante dans le récipient 9a. La séparation du chlorure de sodium en contact avec la saumure dans 9a est réalisable par un procédé discontinu ou continu.

- Dans le cas du procédé discontinu, le chlorure de sodium, qui a décanté dans le récipient 9a, est vidangé par un système de sas dans un autre récipient 9b rempli de la saumure de la cuve 1. Si nécessaire, une pompe 10c est mise en recirculation en cas de blocage du sas lors de la descente du sel cristallisé. Le récipient 9b est isolé de 9a par une vanne. La suspension en 9b est envoyée par une pompe 10b sur un filtre 11b par opération discontinue. Le filtrat est recyclé dans le récipient 9b ou dans la cuve 1. Le récipient 9b est complété ou rempli avec le contenu de la cuve 1. Au cours du remplissage, le récipient 9b est dégazé par le circuit 2c.

- Dans le cas du procédé continu, il est installé sur le récipient 9a une pompe 10a et un circuit de filtration avec essoreuse centrifuge 11a à déchargement automatique de telle façon que le volume du liquide contenu en 9a et dans le circuit de filtration et dans le filtre 11a soit constant. L'essoreuse 11a est située à une hauteur barométrique h en adéquation avec le fonctionnement du procédé.

Le sel solide humide déchargé du filtre à procédé discontinu ou continu contient un peu de saumure chloratée ayant une composition voisine de celle de la cuve 1. Sa teneur en palladium est voisine de 0,2 à 2 mg/kg, étant inférieure à 5 mg/kg. Une partie du chlorure de sodium est retournée à la cuve 1, l'autre partie est expédiée ou recyclée en 13 vers une cellule d'électrolyse à chlorate pour transformer le NaCl en NaClO$_3$. Laver à l'eau le sel pour en diminuer la teneur en chlorate de sodium ne présente pas d'intérêt particulier, car le chlorate n'est pas gênant en vue du recyclage sur des cellules d'électrolyse à chlorate. Eventuellement en cas de recyclage sur une cellule d'électrolyse à soude, l'eau de lavage du sel pourrait être utilisée pour fabriquer la saumure chloratée en 1. La quantité de catalyseur perdue dans le sel étant très faible, les quantités de catalyseur à rajouter dans le réacteur seront très faibles. Les concentrations en palladium dans le réacteur peuvent être plus importantes que celles utilisées selon l'art antérieur, c'est-à-dire plusieurs grammes par litre.

Le système d'alimentation 2a, 2b et 3 est utilisable dans une large gamme de température comprise entre -5°C et 90°C, préférentiellement entre 15 et 70°C. Le choix d'une température implique que les cuves 1, 9a, 9b, le ou les filtres, le système d'alimentation 2a, 2b, 3 et les diverses canalisations de connexion soient maintenues à la température choisie. Pour des raisons de commodité, la température est souvent choisie proche de l'ambiante, mais pour des raisons économiques, on peut avoir intérêt à fonctionner à une température supérieure à l'ambiante, typiquement proche de celle du réacteur évaporateur-cristallisoir. Avec l'augmentation de température, il résulte une teneur en chlorate de la saumure plus élevée, donc une densité plus élevée favorable au fonctionnement de l'invention. Avantageusement, le système d'alimentation peut accepter des variations de débit de saumure chloratée autour du point de consigne, sans nuire à la productivité ni à la sélectivité de la réaction grâce à une concentration en chlorate du réacteur suffisamment élevée pour être considérée comme constante.

Les températures du réacteur évaporateur-cristallisoir 4 peuvent être choisies entre 25 et 90°C, ce qui implique que la pression dans le réacteur soit maintenue entre 20 et 400 mmHg (2 666 Pa et 53 329 Pa). Il est souvent préféré une température comprise entre 50 et 85°C, ce qui implique que la pression dans le réacteur soit maintenue entre 100 et 300 mmHg (13 332 Pa et 39 997 Pa).

Dans ces conditions de fonctionnement du réacteur évaporateur-cristallisoir 4, le mélange de bioxyde de chlore, de chlore et de vapeur d'eau, ou le mélange de bioxyde de chlore et de vapeur d'eau sont tirés sous vide par une pompe à vide 7 ou par tous systèmes classiques d'éjecteurs alimentés à l'air 16a ou à vapeur. En amont, le flux gazeux passe dans un réfrigérant 5 destiné à condenser une part importante de la vapeur d'eau. Les condensats 6a sont récupérés dans un réservoir de recette 6b et sont strippables avec de l'air 16b. Une jambe barométrique relie 6a et 6b. La quantité d'eau enlevée du réacteur par ébullition est ajustée pour être égale à l'eau apportée par les réactifs d'alimentation, de sorte que le niveau du milieu réactionnel dans le réacteur évaporateur-cristallisoir 4 soit maintenu sensiblement constant. L'eau distillée et strippée en 6b est évacuée à l'égout en 17. Les gaz arrivant en 6b sont aspirés par un ventilateur 12 dans la colonne 8 qui transforme du $ClO_2$ en chlorite de sodium. Si les gaz aspirés en 6b contiennent trop de chlore (P supérieur à 10%), il est procédé à une séparation classique $ClO_2/Cl_2$ par dissolution sélective du dioxyde de chlore dans l'eau, puis strippage à l'air du $ClO_2$ dissous qui est alors envoyé sur la colonne 8. Une solution de soude et de peroxyde d'hydrogène alimente cette colonne 8 à contre-courant.

Lorsque les gaz contiennent peu de chlore, de préférence avec P inférieur à 10%, l'élimination sélective du chlore est réalisée en option avec une colonne 19 fonctionnant au peroxyde d'hydrogène dilué à 0,5-1% en poids ou moins et contenant moins d'une mole par litre d'acide chlorhydrique. La réaction complémentaire ($R_3$) réalisée dans la colonne permet d'atteindre une sélectivité S supérieure à 99,9%. L'effluent de la colonne 19 est envoyé dans le réacteur évaporateur-cristallisoir 4, ou il est neutralisé à la soude dans le bac de surverse 18, puis mélangé à la saumure chloratée alimentant le réacteur évaporateur-cristallisoir.

La composition du milieu réactionnel dans le réacteur est la suivante : chlorate de sodium, chlorure de sodium saturé et de l'acide chlorhydrique. Pour obtenir une réduction du chlore généré par les réactions ($R_1$) et ($R_2$), il est possible d'introduire du peroxyde d'hydrogène. Dans ce cas, la composition du milieu réactionnel dans le réacteur évaporateur-cristallisoir est la même avec, en plus, du peroxyde d'hydrogène et une teneur en acide plus faible.

La concentration en chlorate de sodium dans le réacteur peut varier entre 0,2 et 5 moles/l ou, de préférence, entre 1 et 4 moles/l. La concentration en acide chlorhydrique peut varier entre 0,01 et 2 moles/l ou, de préférence, entre 0,02 et 1 mole/l. Avec utilisation de peroxyde d'hydrogène dans le réacteur à des concentrations inférieures à 10 g/l, de préférence inférieures à 5 g/l, il est nécessaire de réduire la concentration en acide chlorhydrique entre 0,01 et 1 mole/l, de préférence, entre 0,05 et 0,20 mole/l. Grâce à l'objet de l'invention, la concentration en $Pd^{2+}$ dans le réacteur peut varier de $0,3 \times 10^{-3}$ mole/1 à 0,017 mole/l, avec, comme avantage, que le sel contiendra moins de 5 mg de $Pd^{2+}$ par kg de chlorure de sodium compté en sec, typiquement entre environ 0,20 et 2 mg/kg.

Le réacteur peut être alimenté avec différentes matières premières en fonction d'un procédé avec ou sans peroxyde d'hydrogène.

Pour le procédé avec le peroxyde d'hydrogène, l'acide chlorhydrique provient d'un fournisseur ou pour un procédé sans peroxyde d'hydrogène, il est généré à partir du chlore obtenu selon la réaction ($R_1$) par combustion avec l'hydrogène d'une cellule d'électrolyse à chlorate.

$$Cl_2 + H_2 \rightarrow 2\,HCl$$

Les catalyseurs, $PdCl_2$ ou $MnCl_2$ ou certains de leurs complexes organométalliques, sont des produits commerciaux. Après leur introduction, ils restent confinés dans le réacteur selon le procédé de l'invention. Ils sont facilement chargés dans le réacteur en les solubilisant dans l'acide chlorhydrique ou dans l'eau. Ils sont insensibles aux impuretés types $Ni^{2+}$, $Fe^{3+}$, $Cr^{3+}$, etc. concentrées dans le milieu réactionnel jusqu'à plusieurs grammes par litre.

Le peroxyde d'hydrogène utilisé est une solution aqueuse contenant environ 30 à 70% en poids de peroxyde d'hydrogène.

Le chlorate de sodium est fabriqué ou acheté à un fournisseur sous forme de solide humide ou sec, sous forme de solution concentrée à 40-50%, puis mis au titre dans la cuve 1.

Le chlorate de sodium peut être avantageusement prélevé sur une boucle d'électrolyse à chlorate. Il est préalablement débarrassé de son bichromate de sodium par précipitation à l'hydrazine selon le brevet américain US-A-4 268 486. La composition du mélange ainsi prélevé est la suivante : NaCl 100 g/l et $NaClO_3$ 600 g/l. Ce mélange est mis au titre par ajout de chlorure de sodium et d'un peu d'eau si la température de fonctionnement de la jambe d'élutriation est choisie inférieure à 60°C.

Avant de passer aux exemples, il est utile de rappeler que l'on ne s'écarterait pas de l'invention en alimentant le réacteur avec des solutions de sulfate et de chlorate de sodium dans le cadre de procédés chlorosulfuriques ou sulfuriques, par remontées à contre-courant dans la jambe d'élutriation.

Les exemples qui suivent sont donc donnés pour mieux illustrer l'invention, mais ils ne sont nullement limitatifs. Ils sont décrits uniquement pour éclairer certains modes essentiels d'utilisation de la présente invention.

EXEMPLE 1

Cet exemple de l'invention illustre la fabrication de $ClO_2$ avec $NaClO_3$ comme chlorate alcalin, HCl comme acide fort, et avec emploi de $H_2O_2$ et extraction du sel formé NaCl en discontinu.

Les matières premières adressées au réacteur (4) sont :

- $H_2O_2$ à 70% en masse ;

- Solution de chlorate de sodium à 48% en masse ;
- Acide chlorhydrique à 33% en masse ;
- Chlorure de sodium récupéré à la filtration et ayant la composition suivante :

| NaCl | 88,5% |
|---|---|
| $NaClO_3$ | 3,6% |
| $Pd^{2+}$ | $1,5 \times 10^{-5}\% \approx 0,15$ mg/kg |
| Humidité | 7,9% [rapport masse d'eau/(masse d'eau + masse de solide)] |

Dans un bécher de 2 litres, il est préparé un mélange de chlorate de soude et de chlorure de sodium à partir de 459 g de solution de chlorate de sodium à 48% massique, de 144 g de chlorure de sodium récupéré humide et de 242 g d'eau, pour obtenir 845 g d'une solution de densité 1,35 ayant la composition suivante :

| $NaClO_3$ | 360 g/l | 25,70% |
|---|---|---|
| NaCl | 203 g/l | 15,10% |
| Eau | 783 g/l | 58,20% |
| $Pd^{2+}$ | non mesurable : | inférieur à 0,1 mg/kg de solution. |

Ce mélange est utilisé à 20°C pour remplir la jambe d'élutriation 3 munie de son réservoir de recette 9a et de sa réserve 9b. Une ampoule de coulée 1 de 3 litres est également remplie de ce même mélange pris à 20°C qui est la température ambiante du laboratoire. Une pompe péristaltique relie le système de dégazage 2a et 2b à l'ampoule de coulée 1. Le haut de la colonne d'élutriation est isolé du réacteur par une vanne à passage droit direct de même diamètre que le tube d'élutriation.

Pour démarrer le procédé en continu, il est procédé au chargement du réacteur avec 786 g d'une saumure préchauffée à 60°C ayant la composition suivante :

| $NaClO_3$ | 170 g/l | 13,3% |
|---|---|---|
| NaCl | 250 g/l | 19,6% |
| Eau | 528 g/l | 67,1% |

Il est ensuite rapidement introduit dans le réacteur, 10 cm³ d'une solution d'acide chlorhydrique à 33%, contenant 0,071 g de chlorure de palladium ($PdCl_2$).

Le niveau de vide de 15 000 Pa est créé et régulé au dessus du réacteur et la température est maintenue à 61°C par un chauffage à double enveloppe.

Les pompes péristaltiques d'alimentation en peroxyde d'hydrogène, et en acide chlorhydrique sont mises en route pour injecter ces produits dans des tubes plongeants dans le réacteur de 1 litre, dont 0,615 litre utile. Simultanément, la vanne d'isolement de fond de réacteur est ouverte et la pompe d'injection de la saumure chloratée est mise sur marche.

Les débits des pompes après stabilisation de la composition du réacteur sont les suivants :

| Acide chlorhydrique à 33% | 22,4 g/h, soit 19,2 cm³/h, |
|---|---|
| Peroxyde d'hydrogène à 70% | 6,8 g/h, soit 5,3 cm³/h |
| Saumure chloratée $NaCl/NaClO_3$ | 65,0 g/h, soit 48,3 cm³/h. |

Le sel en tombant dans le réservoir 9a par la jambe d'élutriation 3 déplace un volume de saumure chloratée complémentaire estimé à 11 cm³/h ou 14,8 g/h pour une production horaire en NaCl à 100% de 23,7 g/h. Le débit de saumure chloratée entrant dans le réacteur en haut de la jambe d'élutriation 3 est donc de 79,8 g/h ou 59,2 cm³/h.

Le réacteur est laissé en fonctionnement environ 8 heures. La composition dans le réacteur est constante au bout de 3 heures et se maintient constante sur la poursuite de l'essai. Le réacteur est alors en régime stabilisé.

A l'équilibre, la composition du réacteur est la suivante :

| Acide chlorhydrique | 5,3 g/l | 0,4% |
|---|---|---|
| Peroxyde d'hydrogène | 1,18 g/l | 0,09% |
| $ClO_2$ dissous | 0,15 g/l | |

(suite)

| | | |
|---|---|---|
| NaClO$_3$ | 184 g/l | 14,3% |
| NaCl | 249 g/l | 19,4% |
| PdCl$_2$ | 0,12 g/l | |
| Eau | 837 g/l | 65% |

La densité à 60°C est d'environ 1,28. Le volume utile de liquide dans le réacteur est de 0,615 litre.

Il sort du réacteur (a) un flux gazeux et (b) un flux de chlorure de sodium solide qu'il faudra séparer de la saumure chloratée.

(a) Flux gazeux

Il est généré un flux gazeux de vapeur d'eau et de dioxyde de chlore contenant très peu de chlore. Le dioxyde de chlore et le chlore sont analysés par chromatographie en phase gazeuse sur colonne Voltalef 300®/Chromosorb T®, thermostatée à 50°C. La teneur en oxygène est mesurée par une oxymètre PEKLY Herrmann-Moritz. Les débits gazeux obtenus sont les suivants :

| | |
|---|---|
| ClO$_2$ | 13,2 g/h |
| Cl$_2$ | 0,26 g/h |
| O$_2$ | 4,5 g/h |
| Eau vapeur | 10,3 + 57,0 = 67,3 g/h |

Au démarrage du réacteur, la sélectivité $\underline{S}$ est de 98,5% ; à l'équilibre, la sélectivité $\underline{S}$se stabilise à 98%. Le rapport $R_1/R_2$ est supérieur à 25. Il est difficile d'évaluer avec précision un rapport $R_1/R_2$ au-delà de 25 et en présence de peroxyde d'hydrogène. La productivité du réacteur est voisine de 9 x $10^{-5}$ mole ClO$_2$/s. litre utile.

Une partie du flux gazeux est condensée avec un réfrigérant situé en amont de la pompe à vide. Les condensats ont la composition suivante :

| | | |
|---|---|---|
| ClO$_2$ | 0,1% | 0,07 g/h |
| Eau liquide | 99,9% | 57,0 g/h |

Le reste du flux gazeux est utilisable pour blanchir des fibres de la pâte à papier ou pour désinfecter l'eau. Il est présentement envoyé sur une colonne d'absorption alimentée avec un mélange stoechiométrique de solutions de soude et d'eau oxygénée, réagissant selon les équations suivantes :

$$2\ ClO_2 + H_2O_2 + 2\ NaOH \rightarrow 2\ NaClO_2 + 2\ H_2O + O_2 \qquad (R_4)$$

$$Cl_2 + H_2O_2 + 2\ NaOH \rightarrow 2\ NaCl + 2\ H_2O + O_2 \qquad (R_5)$$

Il est obtenu un chlorite de sodium en solution, de densité 1,315 et ayant la composition suivante :

| | | |
|---|---|---|
| NaClO$_2$ | 453 g/l | soit 34,5% |
| NaCl | 10,5 g/l | |
| NaOH libre | 10 g/l | |
| H$_2$O$_2$ libre | Néant | |

(b) Flux de chlorure de sodium solide

Le chlorate de sodium se transforme au cours des réactions $R_1$ et $R_2$ en chlorure de sodium. La solution contenue dans le réacteur est saturée en chlorure de sodium. Il se forme donc en continu du chlorure de sodium qui cristallise dans le réacteur. La taille du chlorure de sodium dépend de la vitesse d'agitation et du positionnement des pales dans le réacteur. Il est choisi une disposition qui permet un bon mélange du réacteur tout en maintenant une zone calme en fond du réacteur où arrive la saumure chloratée par la jambe d'élutriation 3. Le diamètre du réacteur est de 0,09 m, et la jambe d'élutriation 3 a un diamètre de 0,011 m. La hauteur de la jambe d'élutriation 3 est de 0,30 m. Le débit de saumure chloratée dans la jambe d'élutriation 3 est de 59,2 cm$^3$/h. La vitesse ascensionnelle de la saumure chloratée dans la jambe est de 2 à 2,6 x 10$^{-4}$ m/s. Dans le même temps, il est fabriqué 23,7 g/h ou 11 cm$^3$/h de chlorure de sodium cristallisé ayant une taille de particule voisine de 100 μm. Le chlorure de sodium descend dans la jambe d'élutriation à une vitesse voisine de 0,6 à 0,7 x 10$^{-2}$ m/s et sédimente dans le ballon de recette 9a. En fin de journée, le sel contenu dans 9a est transvasé dans un autre ballon 9b par ouverture d'une vanne à passage droit. 9b est préalablement rempli de saumure chloratée. Pour éviter les bouchages de la vanne, une pompe assure une recirculation en circuit fermé de 9a vers 9b, de façon à détasser le lit de chlorure de sodium qui descend de 9a vers 9b et de façon à améliorer sa coulabilité. En fin de vidange, la pompe de recirculation est arrêtée et la vanne entre 9a et 9b, fermée.

Le sel contenu dans 9b est filtré sur un buchner et essoré à l'air sans lavage. La production horaire du sel humide est de 27,5 g/h. La composition du sel est la suivante :

| | |
|---|---|
| NaCl | 88,5% |
| NaClO$_3$ | 3,6% |
| Pd$^{2+}$ | 0,15 mg/kg |
| Humidité | 7,9% |

Ce sel de qualité est recyclable à l'alimentation de cellules d'électrolyse à chlorate de sodium. Il serait possible de le laver à l'eau pour en diminuer la teneur en chlorate de sodium, mais le chlorate n'est pas gênant en vue de ce recyclage. L'eau du lavage pourrait être utilisée pour fabriquer la saumure chloratée en 1. Le récipient 9b est de nouveau complètement rempli de saumure chloratée de 1, soit l'équivalent de 18,5 g/h de fonctionnement continu du générateur jusqu'à la décharge discontinue du sel. Le récipient 9b est dégazé par 2c. La recette 9b est prête à recevoir une autre décharge de chlorure de sodium en provenance de 9a.

EXEMPLE DE RÉFÉRENCE 1

Cet exemple reprend l'Exemple 1 du brevet américain US-A-4 421 730 avec PdCl$_2$ comme catalyseur.

1,6 litre d'une solution aqueuse contenant 1 mole/l de chlorate de sodium, 4,5 mole/l de chlorure de sodium et 0,00047 mole/l de PdCl$_2$ est versé dans un réacteur évaporateur-cristallisoir en verre de 2,5 litres de capacité, l'eau est évaporée en continu et enlevée sous une pression réduite de 150 mbar (15 000 Pa) à 60°C. De l'acide à 12 moles/l, du chlorate de sodium à 700 g/l et le peroxyde d'hydrogène à 35% sont alimentés en continu dans le réacteur pour maintenir constant le volume du milieu réactionnel liquide et sa composition. Le réacteur est laissé en fonctionnement pendant 8 heures en régime stabilisé.

Il est fabriqué 313 g de chlorure de sodium imprégné de milieu réactionnel. Le volume du liquide dans le réacteur passe de 1,6 litres à environ 1,7 litres à cause de l'accumulation du sel cristallisé dans le réacteur.

La pureté du dioxyde de chlore formé est de 98% en accord avec le brevet américain US-A-4 421 730 qui indique 98,4%.

On a filtré et essoré à l'air 313 g de sel brut sur un buchner. Après arrêt du dégagement du dioxyde de chlore sur le filtre, par épuisement de l'acide chlorhydrique, le sel récupéré à 25°C est analysé et conduit à la composition suivante :

| | |
|---|---|
| NaCl | 90,6% |
| NaClO$_3$ | 1,2% |
| HCl | 0,05% |
| H$_2$O | inférieur à 0,01 g/l |
| Pd$^{2+}$ | 5 mg/kg (ou 5,5 mg/kg de sel brut sec) |
| Eau | 8,1% |

En recommençant l'essai décrit ci-dessus avec 1,5 g/l de PdCl$_2$ (0,0085 mole/l) dans le milieu réactionnel, le sel brut humide contient Pd$^{2+}$ à la teneur de 90 mg/kg. Le lavage de 100 g de sel brut humide par 50 cm$^3$ de solution saturée en NaCl diminue la teneur en palladium vers 9 mg/kg, et la teneur en chlorate vers 0,5%. Le lavage sur filtre est moins efficace que celui pratiqué dans le système de la présente invention. Le lavage implique un surcoût de recyclage lié à l'évaporation du filtrat de lavage et complique la gestion d'alimentation des réactifs au réacteur. Le lavage reste insuffisant pour obtenir un sel de qualité recyclable à une cellule d'électrolyse à chlorate.

En utilisant 3 g/l de PdCl$_2$ (0,017 mole/l) dans le milieu réactionnel, le sel brut contient un taux de palladium de 183 mg/kg.

EXEMPLE 2

Les conditions de démarrage du réacteur et la composition de la saumure chloratée d'alimentation ($NaClO_3$ : 26,60% ; NaCl : 14,9%) de la jambe d'élutriation 3 sont presque les mêmes que celles de l'Exemple 1, sauf que l'on supprime l'utilisation de peroxyde d'hydrogène et que le titre en HCl a augmenté.

Dès que la composition du réacteur est constante, les débits des pompes sont maintenus aux valeurs suivantes:

Acide chlorhydrique à 33,6% : 45,6 g/h ou 39,1 $cm^3$/h,
Peroxyde d'hydrogène à 70 % ; débit supprimé : 0 g/h
Saumure chloratée NaCl/$NaClO_3$ : 65,0 g/h ou 48,3 $cm^3$/h.

Le sel en tombant dans le réservoir 9a par la jambe d'élutriation 3 déplace un volume de saumure chloratée complémentaire estimé à 11,0 $cm^3$/h ou 14,8 g/h pour une production horaire en NaCl à 100% de 23,7 g/h. Le débit de saumure chloratée entrant dans le réacteur en haut de la jambe d'élutriation 3 est donc de 79,8 g/h ou 59,2 $cm^3$/h.

Le réacteur est laissé en fonctionnement environ 8 heures. La composition dans le réacteur est constante au bout de 2 heures 30 minutes et se maintient constante sur la durée de l'essai. Le réacteur est alors en régime stabilisé.

A l'équilibre, la composition du réacteur est la suivante :

| | | |
|---|---|---|
| Acide chlorhydrique | 5,5 g/l | 0,5% |
| $ClO_2$ dissous | 0,15 g/l | 0,01% |
| $NaClO_3$ | 156 g/l | 12,3% |
| NaCl | 269 g/l | 21,1% |
| $PdCl_2$ | 0,12 g/l | 9,4 x $10^{-4}$ % |
| Eau | 840 g/l | 66% |

La densité à 60°C est d'environ 1,272. Le volume de liquide dans le réacteur est de 0,615 litre.

Il sort du réacteur (a) un flux gazeux et (b) un flux de chlorure de sodium solide qu'il faudra séparer de la saumure chloratée.

(a) Flux gazeux

Il est généré un flux gazeux de vapeur d'eau et de dioxyde de chlore contenant beaucoup de chlore. Les débits gazeux obtenus sont les suivants :

| | |
|---|---|
| $ClO_2$ | 13,2 g/h |
| $Cl_2$ | 8,0 g/h |
| Eau vapeur | 12,3 + 67,9 = 80,2 g/h |

Au démarrage du réacteur, la sélectivité S est de 66,7%, à l'équilibre, la sélectivité S se stabilise à 63,5%. Le rapport $R_1/R_2$ est voisin de 40.

Dans les mêmes conditions sans catalyseur, la sélectivité S se stabilise vers 47,6% et le rapport $R_1/R_2$ est voisin de 4,5.

Une partie du flux gazeux est condensé avec un réfrigérant. Les condensats ont la composition suivante :

| | | |
|---|---|---|
| $ClO_2$ | 0,1 % | 0,08 g/h |
| Eau liquide | 99,9 % | 67,9 g/h |

Le reste du flux gazeux est envoyé sur une colonne d'absorption alimentée avec un mélange stoechiométrique de solutions de soude et de peroxyde d'hydrogène.

Il est obtenu un chlorite de sodium en solution, de densité 1,269 à 20°C et ayant la composition suivante :

| | | |
|---|---|---|
| $NaClO_2$ | 254 g/l | 20% |
| NaCl | 200 g/l | 15% |

(suite)

| NaOH libre | 10 g/l |  |
|---|---|---|
| $H_2O_2$ libre | néant. |  |

(b) <u>Flux de chlorure de sodium solide</u>

Le débit de saumure chloratée dans la jambe d'élutriation 3 est de 59,2 cm$^3$/h. La vitesse ascensionnelle de la saumure chloratée dans la jambe est de 1,9 à 2,3 x 10$^{-4}$ m/s. Dans le même temps, il est fabriqué 23,7 g/h ou 11,0 cm$^3$/h de chlorure de sodium cristallisé ayant une taille de particule voisine de 100 μm. Le chlorure de sodium descend dans la jambe d'élutriation 3 à une vitesse voisine de 0,65 x 10$^{-2}$ m/s et sédimente dans le ballon de recette 9a. Le sel contenu dans 9a est transvasé dans un autre ballon 9b. Le sel contenu dans 9b est filtré sur un buchner et essoré à l'air sans lavage. La production horaire du sel brut humide est de 27,5 g/h. La composition du sel est la suivante :

| NaCl | 88,5% |
|---|---|
| $NaClO_3$ | 3,6% |
| $Pd^{2+}$ | 0,20 mg/kg |
| Eau | 7,9% |

Ce sel de qualité est recyclable à l'alimentation de cellules d'électrolyse à chlorate de soude.

<u>EXEMPLE DE REFERENCE 2</u>

L'expérience décrite dans l'Exemple 1 du brevet américain US-A-4 421 730 a été répétée, sauf que le milieu réactionnel contient 0,2 mole/l de HCl (7,3 g/l) et 0,00041 mole/l de chlorure de palladium $PdCl_2$ (au lieu de 0,00040 mole/l). Le milieu réactionnel contient 1,1 mole/l de $NaClO_3$ et 4,8 mole/l de NaCl comme dans l'Exemple 1 du brevet américain US-A-4 421 730.

La qualité du sel n'est pas mentionnée. Après 4 heures de fonctionnement, le niveau dans le réacteur est d'environ 1,7 l, et la quantité de sel produite, proche de celle de l'Exemple 1 du brevet américain US-A-4 421 730.

On a filtré et essoré à l'air 263,5 g de sel brut sur un buchner. Après arrêt du dégagement du dioxyde de chlore sur le filtre, par épuisement de l'acide chlorhydrique, le sel est analysé et conduit à la composition suivante :

| NaCl | 90,6% |
|---|---|
| $NaClO_3$ | 1,1% |
| HCl | 0,06% |
| $Pd^{2+}$ | 5 mg/kg (ou 5,5 mg/kg de sel brut sec) |
| Eau | 8,3% |

Selon ce même brevet américain US-A-4 421 730, il est obtenu une sélectivité en dioxyde de chlore <u>S</u> de 58,5% et un rapport $NaClO_3/ClO_2$ de 1,69 kg/kg.

Les résultats de l'Exemple 2 sont assez comparables puisqu'en fonctionnant à 5,5 g/l au lieu de 7,3 g/l en HCl et en utilisant 0,00068 mole/l de $PdCl_2$ au lieu de 0,00041 mole/l, il est obtenu, dans l'Exemple 2, une sélectivité <u>S</u> de 63,5% et un rapport $NaClO_3/ClO_2$ de 1,66 kg/kg.

<u>EXEMPLE 3</u>

L'Exemple 1 ou 2 est réalisable en utilisant une matière première de saumure chloratée fabriquée à partir du chlorate cristallisé et de chlorure de sodium du filtre 11<u>a</u> ou 11<u>b</u> :

Il est dissous dans un bécher de 2 litres, 222 g de chlorate de sodium cristallisé ayant 1% d'humidité avec 478 g d'eau. Il est ajouté 144 g de chlorure de sodium ayant la composition décrite à la fin de l'Exemple 1. La composition des 844 g du mélange à 20°C est la suivante :

| $NaClO_3$ | 310 g/l | 26,70% |
|---|---|---|
| NaCl | 203 g/l | 15,10% |
| Eau | 783 g/l | 58,20% |

(suite)

| Pd$^{2+}$ non mesurable : | inférieur à 0,1 mg/kg de solution. |
|---|---|

La densité à 20°C est de 1,346.

Cette saumure chloratée est utilisable dans les exemples 1 et 2 comme matière première dans le système de l'invention.

EXEMPLE 4

Le procédé de l'invention fonctionne avec des concentration en palladium dans le réacteur qui sont très élevées, il est choisi un mode de réalisation conforme à l'Exemple 1 sauf que la concentration en palladium du réacteur est augmentée de 0,12 g/l à 3 g/l.

La sélectivité $\underline{S}$ est de 99%.

La composition du sel brut est la suivante :

| NaCl | 88,6% |
|---|---|
| NaClO$_3$ | 3,7% . |
| Pd$^{2+}$ | 2 mg/kg |
| Humidité | 7,7%. |

Exemple 5

On opère comme décrit à l'Exemple 2, sauf que l'on utilise 0,5 g/l de MnCl$_2$ à la place du sel de palladium.

La sélectivité $\underline{S\ est}$ de 60% et la composition du sel brut est la suivante :

NaCl = 88,7%
NaClO$_3$ = 3,6%
Mn$^{2+}$ = 4 mg/kg
Humidité = 7,7%

**Revendications**

1. Procédé de fabrication de bioxyde de chlore par réduction d'un chlorate dans un acide fort, ladite réduction étant conduite dans un réacteur évaporateur-cristallisoir (4), dans des conditions capables de conduire à un flux gazeux contenant le bioxyde de chlore recherché et un flux de sel dudit acide fort à l'état cristallisé, obtenu comme sous-produit, caractérisé en ce que l'on amène le flux de sel cristallisé formé dans le réacteur évaporateur-cristallisoir, à tomber dans une jambe d'élutriation (3) dans laquelle il est lavé par une solution saline saturée alimentant ledit réacteur évaporateur-cristallisoir (4) par remontée à contre-courant dans ladite jambe d'élutriation (3).

2. Procédé selon la revendication 1, caractérisé en ce que la solution saline saturée est une saumure chloratée.

3. Procédé selon l'une des revendications 1 ou 2, caractérisé en ce que l'on utilise, comme chlorate, le chlorate de sodium, le chlorate de potassium, le chlorate de calcium ou le chlorate de magnésium.

4. Procédé selon l'une des revendications 1 à 3, caractérisé en ce que l'on utilise comme acide fort, l'acide chlorhydrique, l'acide sulfurique et leurs mélanges.

5. Procédé selon l'une des revendications 1 à 4, caractérisé en ce que l'agent réducteur est l'ion Cl⁻ provenant notamment du chlorure de sodium, du chlorure de calcium, du chlorure de potassium ou de l'acide chlorhydrique.

6. Procédé selon l'une des revendications 1 à 5, caractérisé en ce que l'on conduit la réaction dans le réacteur évaporateur-cristallisoir (4) en présence d'un catalyseur de la réaction formant le bioxyde de chlore, ledit catalyseur restant en permanence confiné dans ledit réacteur évaporateur-cristallisoir (4) par suite du lavage, dans la jambe d'élutriation (3), du sel cristallisé sortant de ce dernier.

7. Procédé selon la revendication 6, caractérisé en ce que l'on utilise, comme catalyseur, un sel de palladium (II) ou de manganèse ou un complexe organométallique du palladium (II) ou du manganèse, soluble dans le milieu réactionnel.

8. Procédé selon la revendication 7, caractérisé en ce que la concentration en $Pd^{2+}$ dans le réacteur évaporateur-cristallisoir (4) varie entre $0,3 \times 10^{-3}$ mole/l et 0,017 mole/l.

9. Procédé selon l'une des revendications 1 à 8, caractérisé en ce que l'alimentation en chlorate dans le réacteur est assurée en totalité par la solution saline saturée.

10. Procédé selon l'une des revendications 1 à 9, dans lequel l'acide fort est l'acide chlorhydrique, caractérisé en ce que l'on conduit la réaction en présence de peroxyde d'hydrogène pour réduire in situ en HCl le chlore formé comme sous-produit dans le réacteur évaporateur-cristallisoir (4), ledit peroxyde d'hydrogène étant introduit dans le réacteur évaporateur-cristallisoir (4) directement ou avec le flux de solution saline saturée entrant par la jambe d'élutriation (3) ; de l'oxygène étant formé dans le flux gazeux de $ClO_2$ ; et la teneur en acide chlorhydrique introduite dans le réacteur évaporateur-cristallisoir (4) étant abaissée pour tenir compte dudit chlore formé in situ.

11. Procédé selon l'une des revendications 1 à 10, caractérisé en ce que l'on choisit les dimensions de la jambe d'élutriation (3) pour obtenir une vitesse ascensionnelle du courant d'alimentation en chlorate très inférieure, par exemple de l'ordre de $10^{-3}$ à $10^{-4}$ m/s, à la vitesse de chute des cristaux de sel, qui est de l'ordre de $10^{-1}$ à $10^{-3}$ m/s.

12. Procédé selon l'une des revendications 1 à 11, caractérisé en ce que la température de la jambe d'élutriation est comprise entre -5°C et 90°C, de préférence entre 15 et 70°C, et que l'on maintient le réacteur évaporateur-cristallisoir (4) à une température comprise entre 25 et 90°C, la pression dans celui-ci étant alors maintenue entre 20 et 400 mmHg (2666 Pa et 53329 Pa).

13. Procédé selon l'une des revendications 1 à 12, caractérisé en ce qu'après lavage dans la jambe d'élutriation, le sel cristallisé est séparé de la solution saline saturée par filtration.

14. Procédé selon la revendication 13, caractérisé en ce que l'acide fort est HCl, que le chlorate est $NaClO_3$, et que le NaCl cristallisé filtré est adressé à une cellule d'électrolyse à chlorate.

15. Procédé selon l'une des revendications 1 à 14, caractérisé en ce que l'on fait passer le flux gazeux contenant le bioxyde de chlore, la vapeur d'eau formée, et le cas échéant l'oxygène, dans un réfrigérant (5) pour condenser une part importante de la vapeur d'eau, les condensats (6a) étant strippés (en 6b) avec de l'air (16b) et l'eau strippée étant évacuée (en 17).

16. Procédé selon la revendication 15, caractérisé en ce que l'acide fort utilisé est l'acide chlorhydrique, le flux gazeux, contenant alors également du chlore, étant soumis à une séparation $ClO_2/Cl_2$, consistant notamment, si la productivité P de chlore est supérieure à 10%, à une dissolution sélective de $ClO_2$ dans l'eau, puis à un strippage à l'air du $ClO_2$ dissous, et si la productivité P est inférieure à 10%, par traitement dans une colonne (19) fonctionnant au peroxyde d'hydrogène dilué à environ 0,5 - 1% en poids et contenant moins d'une mole/l d'acide chlorhydrique, l'effluent de ladite colonne (19) étant envoyé dans le réacteur évaporateur-cristallisoir (4) ou étant neutralisé à la soude et mélangé à l'alimentation en chlorate.

17. Procédé selon l'une des revendications 1 à 16, caractérisé en ce que le chlorate est $NaClO_3$ et l'acide fort, HCl, la concentration en chlorate dans le réacteur évaporateur-cristallisoir (4) étant comprise entre 0,2 et 5 moles/l, la concentration en acide chlorhydrique dans le réacteur évaporateur-cristallisoir (4) étant comprise entre 0,01 et 2 moles/l s'il n'est pas utilisé de peroxyde d'hydrogène, et entre 0,01 et 1 mole/l, s'il est utilisé du peroxyde d'hydrogène, ce dernier étant utilisé à une concentration dans le réacteur évaporateur-cristallisoir (4) inférieure à 10 g/l.

Figure unique

Office européen
des brevets

**RAPPORT DE RECHERCHE EUROPEENNE**

Numéro de la demande

EP 97 40 2949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 049 785 A (FULLER WILLARD A) 20 septembre 1977<br>* colonne 2, ligne 36 - colonne 3, ligne 52; figures 1-3 *<br>--- | 1,3-5 | C01B11/02 |
| A | GB 2 011 362 A (ERCO IND LTD) 11 juillet 1979<br>* page 1, ligne 35 - ligne 46; figure 1 *<br>--- | 1 | |
| A | US 4 045 542 A (FULLER WILLARD A) 30 août 1977<br>* colonne 3, ligne 34 - ligne 44; figures 1,2 *<br>--- | 1 | |
| D,A | US 4 421 730 A (ISA ISAO ET AL) 20 décembre 1983<br>* le document en entier *<br>--- | 1-17 | |
| D,A | US 4 178 356 A (ISA ISAO ET AL) 11 décembre 1979<br>* le document en entier *<br>----- | 1-17 | DOMAINES TECHNIQUES RECHERCHES (Int.Cl.6)<br><br>C01B |

Le présent rapport a été établi pour toutes les revendications

| Lieu de la recherche | Date d'achèvement de la recherche | Examinateur |
|---|---|---|
| LA HAYE | 16 mars 1998 | Shade, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P04C02)